# EUROPEAN PATENT APPLICATION

(11) **EP 3 357 791 A1**
(43) Date of publication of application: **08.08.2018**
(21) Application number: 16851149.1
(22) Date of filing: 13.09.2016
(51) Int. Cl.: B62D 6/00, B62D 113/00, B62D 119/00, B62D 137/00

(54) **ELECTRIC POWER STEERING DEVICE**

(30) Priority: 01.10.2015 JP 2015196055
(71) Applicant: KYB Corporation, Tokyo 105-6111 (JP)
(72) Inventor: ISHIKAWA, Hisazumi, Tokyo 105-6111 (JP); KIKUCHI, Teruyuki, Tokyo 105-6111 (JP)
(74) Representative: Grünecker Patent- und Rechtsanwälte PartG mbB
(86) International application number: PCT/JP2016/077011
(87) International publication number: WO 2017/056975

(57) **Abstract**

A electric power steering device (100) includes: a torque sensor (12) and an automatic steering control unit (60) that controls an electric motor (10) during automatic steering. The automatic steering control unit (60) includes: an angular velocity target value computation unit (61) that computes an angular velocity target value for controlling the electric motor (10) and a vibration compensation unit (70) that computes a twist angle of a torsion bar (4), and computes a vibration compensation signal for controlling the electric motor (10). The automatic steering control unit (60) controls the electric motor (10) on the basis of the angular velocity target value and the vibration compensation signal.

## Description

### TECHNICAL FIELD

The present invention relates to an electric power steering device.

### BACKGROUND ART

JP 08-337181A describes an automatic steering device that automatically steers a vehicle in accordance with a steering angle target value set from such information as road shapes. In this automatic steering device, a motor for steering is connected, via a gear, to an upper shaft that rotates integrally with a steering wheel. This automatic steering device performs automatic steering by controlling this motor.

### SUMMARY OF INVENTION

The automatic steering device described in JP 08-337181A is configured to detect a torque that acts on the upper shaft disposed between the motor and the steering wheel. A torsion bar is used in a section where this torque is detected.

In the automatic steering device described in JP 08-337181A, when the motor operates during automatic steering, the torsion bar becomes twisted due to the inertia of the steering wheel and a driving force of the motor. Accordingly, the steering wheel, which is connected to the torsion bar, starts to rotate by an amount of twisting of the torsion bar with a time lag behind the operation of the motor. Then, when the motor stops, the torsion bar tends to resolve the twisting thus created by its own elastic force. At this time, due to the inertia of the steering wheel, the torsion bar goes beyond a position where the twisting is resolved and becomes twisted in the reverse direction. If the torsion bar is twisted in the reverse direction, the torsion bar tends to resolve the twisting under its elastic force, but goes beyond a position where the twisting is resolved and becomes twisted further in the reverse direction due to the inertia of the steering wheel. The repetition of such twisting of the torsion bar will cause vibration of the steering wheel joined to the torsion bar along with the movement of the torsion bar.

An object of the present invention is to restrain steering vibration during automatic steering.

According to one aspect of the present invention, an electric power steering device includes: a steering shaft joined to a steering member operated by a driver, the steering shaft being configured to rotate as the driver operates the steering member; a torsion bar composing a part of the steering shaft; a torque sensor configured to detect a torque acting on the torsion bar; an electric motor used for steering assistance based on a detection signal from the torque sensor or automatic steering based on out-of-vehicle information; and an automatic steering control unit configured to control the electric motor during the automatic steering. The automatic steering control unit includes: an angular velocity target value computation unit configured to compute an angular velocity target value for controlling the electric motor on the basis of a steering angle target value and a steering angle of the steering member, the steering angle target value being set on the basis of a moving target position of a vehicle, the steering angle being detected by a steering angle detection unit configured to detect the steering angle; and a vibration compensation unit configured to compute a twist angle of the torsion bar on the basis of the torque detected by the torque sensor, and compute a vibration compensation signal for controlling the electric motor in a direction of restraint of twisting of the torsion bar on the basis of the twist angle. The automatic steering control unit controls the electric motor on the basis of the angular velocity target value and the vibration compensation signal.

### BRIEF DESCRIPTION OF DRAWINGS

FIG. 1 shows a configuration of an electric power steering device according to an embodiment of the present invention.
FIG. 2 is a block diagram of the electric power steering device according to the embodiment of the present invention.
FIG. 3 is a block diagram of a steering angle control unit of the electric power steering device according to the embodiment of the present invention.
FIG. 4 is a block diagram of the steering angle control unit of the electric power steering device according to an exemplary modification of the embodiment of the present invention.

### DESCRIPTION OF EMBODIMENTS

The following describes an embodiment of the present invention with reference to the drawings.

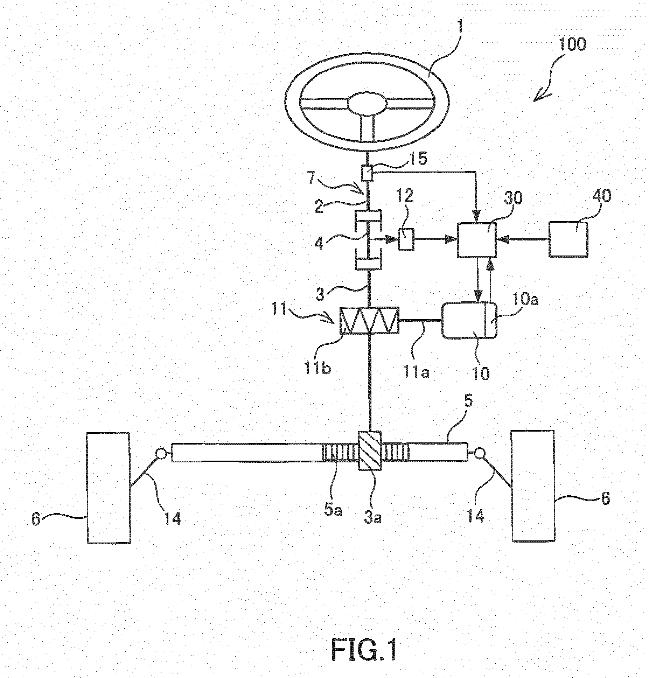

An electric power steering device 100 according to the embodiment of the present invention will now be described with reference to FIGs. 1 to 3.

As shown in FIG. 1, the electric power steering device 100 includes: an input shaft 2 that is joined to a steering wheel 1 serving as a steering member operated by a driver, and rotates in accordance with an operation performed by the driver with respect to the steering wheel 1 (hereinafter referred to as a "steering operation"); an output shaft 3 linked to a rack shaft 5 that turns wheels 6; and a torsion bar 4 via which the input shaft 2 and the output shaft 3 are joined to each other. The input shaft 2, the output shaft 3, and the torsion bar 4 compose a steering shaft 7.

A pinion gear 3a that engages with a rack gear 5a formed on the rack shaft 5 is formed on a lower portion of the output shaft 3. When the steering wheel 1 is steered, the steering shaft 7 rotates, and this rotation is converted into a linear motion of the rack shaft 5 by the pinion gear 3a and the rack gear 5a, thereby turning the wheels 6 via knuckle arms 14.

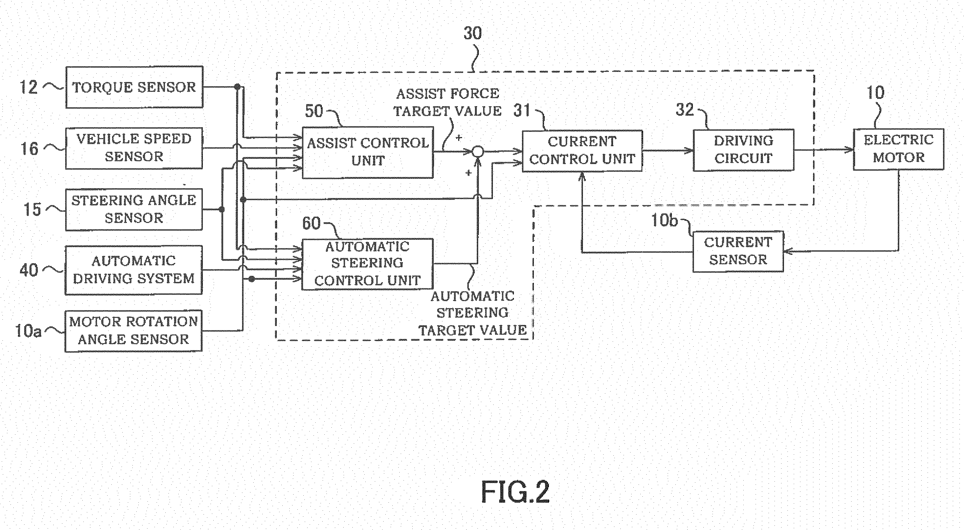

The electric power steering device 100 further includes: an electric motor 10 which is a power source for assisting the driver's steering of the steering wheel 1; a decelerator 11 that decelerates the rotation of the electric motor 10 and that transmits to the output shaft 3 ; a torque sensor 12 for detecting a torque that acts on the torsion bar 4 due to the relative rotations of the input shaft 2 and the output shaft 3 associated with the steering operation by the driver; a controller 30 that controls the electric motor 10; and a current sensor 10b (FIG. 2) that detects a value of current flowing through the electric motor 10.

The electric motor 10 is provided with a motor rotation angle sensor 10a that obtains a rotation angle of the electric motor 10. The motor rotation angle sensor 10a is composed of a resolver.

The decelerator 11 is composed of a worm shaft 11a that is joined to an output shaft of the electric motor 10, and a worm wheel 11b that is joined to the output shaft 3 and engages with the worm shaft 11a. A torque output from the electric motor 10 is transmitted from the worm shaft 11a to the worm wheel 11b, and then applied to the output shaft 3.

A steering torque that is applied to the input shaft 2 in accordance with the steering operation by the driver is detected by the torque sensor 12, and the torque sensor 12 outputs a voltage signal corresponding to this steering torque to the controller 30. The controller 30 computes a torque to be output from the electric motor 10 on the basis of the voltage signal from the torque sensor 12, and controls driving of the electric motor 10 so as to generate that torque. In the above-described manner, the electric power steering device 100 detects the steering torque applied to the input shaft 2 using the torque sensor 12, and assists the steering operation by the driver by controlling driving of the electric motor 10 using the controller 30 on the basis of the result of the detection.

The input shaft 2 is provided with a steering angle sensor 15 serving as a steering angle detection unit that detects a steering angle, which is a rotation angle of the steering wheel 1. As a rotation angle of the input shaft 2 and a steering angle of the steering wheel 1 are equal to each other, the steering angle of the steering wheel 1 is obtained by detecting the rotation angle of the input shaft 2 using the steering angle sensor 15. The result of the detection by the steering angle sensor 15 is output to the controller 30.

Although not illustrated, the steering angle sensor 15 includes, for example, a center gear that rotates integrally with the input shaft 2 and two outer gears that engage with the center gear, and computes a rotation angle of the center gear, that is, a rotation angle of the input shaft 2 on the basis of a change in a magnetic flux associated with the rotations of the two outer gears.

The controller 30 includes a CPU that controls the operation of the electric motor 10, a ROM that stores, for example, control programs and setting values necessary for the processing operation of the CPU, and a RAM that temporarily stores information detected by various types of sensors including the torque sensor 12 and the steering angle sensor 15.

The electric motor 10 can also perform automatic steering on the basis of out-of-vehicle information independently of the steering operation by the driver, in addition to assisting the steering operation by the driver on the basis of the result of the detection by the torque sensor 12 as described above. The electric motor 10 selectively performs steering assistance based on a steering torque detected by the torque sensor 12 or automatic steering based on out-of-vehicle information.

Switching from manual steering by the driver to automatic steering is carried out by selecting an automatic driving mode via a driver's operation. On the other hand, switching from automatic steering to manual steering is carried out either when an intervention determination unit (not illustrated) of the controller 30 has determined that the driver has made an intervention in the steering operation, or when the driver has operated a selection switch.

The intervention determination unit makes a determination about a steering intervention operation by the driver on the basis of a steering torque detected by the torque sensor 12. Specifically, the intervention determination unit determines that the driver has performed a steering intervention operation when a steering torque detected by the torque sensor 12 has become equal to or larger than a predetermined value. The result of this determination is output to the controller 30, and the controller 30 switches a control method of the electric motor 10 to assist control by disabling automatic steering control.

As shown in FIG. 2, the controller 30 includes: an assist control unit 50 that performs the assist control with the aid of the electric motor 10 on the basis of detected values from various types of sensors when the driver is performing a steering operation; and an automatic steering control unit 60 that performs automatic control with the aid of the electric motor 10 on the basis of detected values from various types of sensors during automatic steering.

The assist control unit 50 computes an assist force target value on the basis of a steering torque detected by the torque sensor 12, a vehicle speed detected by a vehicle speed sensor 16 mounted on a vehicle, and a steering angle of the steering wheel 1 detected by the steering angle sensor 15.

Automatic steering is performed on the basis of an instruction signal (a steering angle target value) from an automatic driving system 40 of the vehicle. Specifically, the automatic driving system 40 detects, as out-of-vehicle information, boundary lines (white lines) of a vehicle lane in which the vehicle is currently driving, computes a steering angle target value that is necessary for the vehicle to keep driving inside the vehicle lane, and outputs this steering angle target value to the automatic steering control unit 60. In other words, the steering angle target value is set on the basis of a moving target position of the vehicle. The automatic steering control unit 60 computes an automatic steering target value on the basis of the steering angle of the steering wheel 1 detected by the steering angle sensor 15 and the steering angle target value input from the automatic driving system 40. The details will be described later.

The controller 30 further includes: a current control unit 31 that controls current applied to the electric motor 10 on the basis of the assist force target value or the automatic steering target value; and a driving circuit 32 for controlling driving of the electric motor 10. In the electric power steering device 100, feedback control is performed by feeding a current value of the electric motor 10 detected by the current sensor 10b back to the current control unit 31.

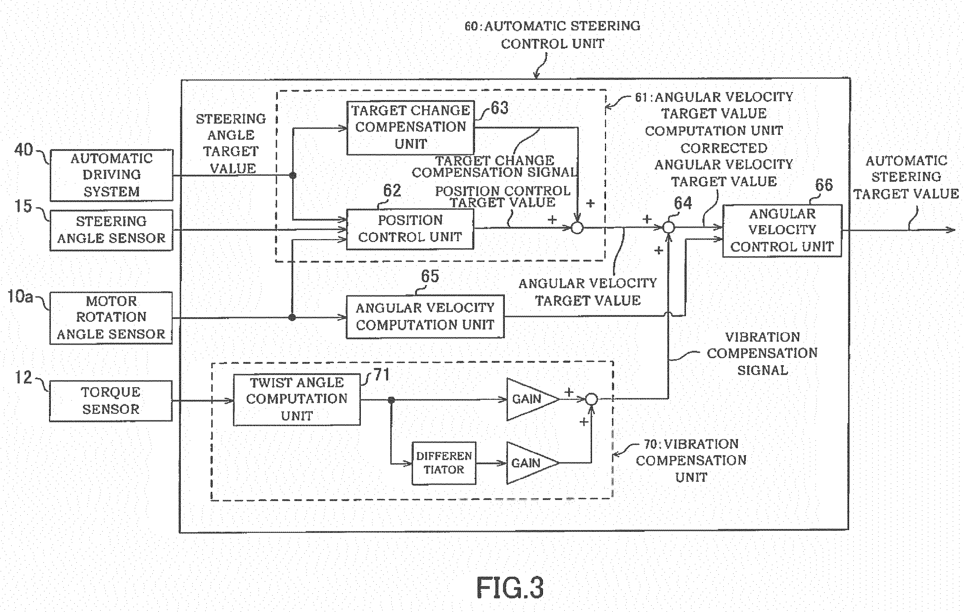

Next, the automatic steering control unit 60 will be described with reference to FIG. 3. FIG. 3 is a block diagram of the automatic steering control unit 60.

The automatic steering control unit 60 includes an angular velocity target value computation unit 61 that computes an angular velocity target value for controlling the electric motor 10 on the basis of the steering angle target value input from the automatic driving system 40 and the steering angle of the steering wheel 1 detected by the steering angle sensor 15.

The angular velocity target value computation unit 61 includes: a position control unit 62 that computes, on the basis of the difference between the steering angle target value output from the automatic driving system 40 and the steering angle of the steering wheel 1 detected by the steering angle sensor 15, a position control target value for controlling the electric motor 10 so that the steering angle of the steering wheel 1 matches the steering angle target value; and a target change compensation unit 63 that computes a target change compensation signal on the basis of a change per unit time in the steering angle target value output from the automatic driving system 40.

When the position control unit 62 computes the position control target value, the steering angle of the steering wheel 1 detected by the steering angle sensor 15 is used. However, a detection cycle of the steering angle sensor 15 is a relatively long interval. When the steering wheel 1 has been quickly steered, the steering angle of the steering wheel 1 cannot be detected with high precision with the use of the steering angle sensor 15 alone.

In view of this, in order to detect the steering angle of the steering wheel 1 with higher precision, the position control unit 62 computes a high-precision steering angle by correcting the steering angle detected by the steering angle sensor 15 using a motor rotation angle detected by the motor rotation angle sensor 10a. Specifically, the motor rotation angle sensor 10a detects a motor rotation angle, which is an amount of change in a rotation angle of the electric motor 10, in a cycle shorter than the detection cycle of the steering angle sensor 15. An amount of change in a rotation angle of the output shaft 3 can be obtained from the motor rotation angle detected by the motor rotation angle sensor 10a and a speed reduction rate of the decelerator 11 (a speed reduction ratio between the output shaft 3 and the electric motor 10). Therefore, the high-precision steering angle of the steering wheel 1 can be computed in a short cycle by adding the amount of change in the rotation angle of the output shaft 3, which is obtained from the motor rotation angle detected by the motor rotation angle sensor 10a and the speed reduction rate of the decelerator 11, to the steering angle detected by the steering angle sensor 15. In this way, the high-precision steering angle can be obtained even when the steering wheel 1 has been quickly steered. As such, the motor rotation angle sensor 10a functions as a part of a steering angle detection device in the present embodiment.

As described above, in the electric power steering device 100, the steering angle of the steering wheel 1 is computed on the basis of the motor rotation angle of the electric motor 10 detected by the motor rotation angle sensor 10a and the rotation angle of the steering wheel 1 detected by the steering angle sensor 15. Accordingly, the high-precision steering angle can be obtained. Note that the detection cycle of the steering angle sensor 15 is approximately 10 milliseconds, and the detection cycle of the motor rotation angle sensor 10a is equal to or shorter than 1 millisecond, for example. However, when the detection cycle of the steering angle sensor 15 is short, only the steering angle detected by the steering angle sensor 15 may be used.

The position control unit 62 computes the difference between the steering angle target value and the steering angle of the steering wheel 1, and computes the position control target value, which is equivalent to an angular velocity targeted by the steering wheel 1, by multiplying this difference by a predetermined gain through the execution of PD control. The gain, specifically, is equivalent to a reciprocal of the unit time. The position control unit 62 computes the position control target value, which is intended to make the steering angle match the steering angle target value, on the basis of the difference between the steering angle target value output from the automatic driving system 40 and the actual steering angle of the steering wheel 1 detected by the steering angle sensor 15. That is, the position control unit 62 performs position feedback control based on the difference between the steering angle target value and the actual steering angle of the steering wheel 1.

The target change compensation unit 63 computes the target change compensation signal by dividing the difference between the previous steering angle target value and the current steering angle target value output from the automatic driving system 40 by the unit time (an interval at which the steering angle target value is output) through the execution of PID control.

The angular velocity target value computation unit 61 adds the target change compensation signal computed by the target change compensation unit 63 to the position control target value computed by the position control unit 62. This is intended to improve the tracking property with respect to a change in the steering angle target value. The details will be described below.

If the steering angle target value changes rapidly, there is a possibility that, under control of the position control unit 62, control of the electric motor 10 cannot track (lags behind) the change in the steering angle target value. The following describes, as an example, the case of a rapid change from a state where the steering angle target value is larger than the actual steering angle, to a state where the steering angle target value is smaller than the actual steering angle.

When the steering angle target value starts to change, the steering angle target value is larger than the actual steering angle, and thus the position control unit 62 outputs a position control target value that will increase the steering angle of the steering wheel 1. Therefore, the electric motor 10 is driven so as to increase the steering angle of the steering wheel 1. Even if the steering angle target value is decreasing, as long as the actual steering angle is smaller than the steering angle target value, the position control unit 62 outputs a position control target value that will increase the steering angle of the steering wheel 1 so as to make the actual steering angle match the steering angle target value. When the steering angle target value has further decreased and become smaller than the actual steering angle, the position control unit 62 outputs, from this point, a position control target value that will reduce the steering angle of the steering wheel 1 so as to track the steering angle target value. In the above-described manner, under control of the position control unit 62, even in the event of a change whereby the steering angle target value rapidly becomes small, the position control unit 62 keeps outputting a position control target value that will increase the steering angle of the steering wheel 1 until the actual steering angle matches the steering angle target value. This easily creates lag.

For this reason, the angular velocity target value computation unit 61 computes the target change compensation signal, which is equivalent to the speed of change in the steering angle target value, and generates the angular velocity target value by adding the target change compensation signal computed by the target change compensation unit 63 to the position control target value computed by the position control unit 62. In this way, even if the steering angle target value has rapidly changed, the target change compensation signal computed by the target change compensation unit 63 compensates for the change in the steering angle target value. Therefore, by performing control using the angular velocity target value generated by adding the target change compensation signal to the position control target value, the tracking property with respect to the change in the steering angle target value is improved compared to a case where control is performed using only the position control target value computed by the position control unit 62.

The automatic steering control unit 60 further includes a vibration compensation unit 70 that computes a twist angle of the torsion bar 4 on the basis of the torque detected by the torque sensor 12, and computes a vibration compensation signal for controlling the electric motor 10 in the direction in which twisting of the torsion bar 4 is restrained on the basis of the twist angle.

The vibration compensation unit 70 includes a twist angle computation unit 71 that computes a twist angle of the torsion bar 4 from the torque detected by the torque sensor 12. The vibration compensation unit 70 computes the vibration compensation signal by performing PD control with respect to the twist angle computed by the twist angle computation unit 71.

The vibration compensation signal is a signal for restraining vibration of the steering wheel 1 generated due to the inertia of the steering wheel 1 and the spring property of the torsion bar 4. A specific description is now given of vibration of the steering wheel 1 generated due to the inertia of the steering wheel 1 and the spring property of the torsion bar 4.

When the electric motor 10 operates during automatic steering, the rotation of the electric motor 10 is transmitted to the output shaft 3 via the decelerator 11. The rotation of the output shaft 3 causes the steering wheel 1 to rotate via the torsion bar 4 and the input shaft 2. At this time, as the torsion bar 4 has the spring property and the inertia, which is a tendency to remain as is, acts on the steering wheel 1, the torsion bar 4 becomes twisted when the output shaft 3 starts to rotate. Then, the steering wheel 1 starts to rotate by an amount of twisting of the torsion bar 4 with a time lag behind the output shaft 3. Thereafter, even if the electric motor 10 stops, the steering wheel 1 keeps rotating due to the spring force of the torsion bar 4 and the inertia of the steering wheel, and goes beyond a position where the twisting of the torsion bar 4 is resolved, thereby twisting the torsion bar 4 in the reverse direction. Such twisting of the torsion bar 4 in the reverse direction creates a difference between the steering angle detected by the steering angle sensor 15 and the steering angle target value. Thus, in order to eliminate this difference, the electric motor 10 operates so as to rotate the output shaft 3 in the reverse direction. At the same time, the torsion bar 4 rotates in the reverse direction, under its spring force, in an attempt to resolve the twisting of the torsion bar 4 itself again. Although the electric motor 10 stops at the steering angle target value, the steering wheel 1 keeps rotating due to its inertia even if it reaches a position where the twisting of the torsion bar 4 is resolved, thereby twisting the torsion bar 4 further in the reverse direction. The repetition of the foregoing operation causes vibration of the steering wheel 1.

To restrain such vibration, the vibration compensation unit 70 outputs the vibration compensation signal to the electric motor 10. Specifically, when the torsion bar 4 has been twisted due to the leftward rotation of the output shaft 3, the vibration compensation unit 70 outputs, to the electric motor 10, a vibration compensation signal that will restrain the rotation of the output shaft 3 in the direction in which the twisting of the torsion bar 4 is restrained, that is, the leftward direction, in accordance with the magnitude of a twist angle of the torsion bar 4. In this way, a torque of the electric motor 10 in the leftward rotation direction is restrained, and accordingly, the twisting of the torsion bar 4 is restrained. Therefore, vibration of the steering wheel 1 generated due to the inertia of the steering wheel 1 and the twisting of the torsion bar 4 is restrained. Similarly, when the torsion bar 4 has been twisted due to the rightward rotation of the output shaft 3, the vibration compensation unit 70 outputs, to the electric motor 10, a vibration compensation signal that will restrain the rotation of the output shaft 3 in the direction in which the twisting of the torsion bar 4 is restrained, that is, the rightward direction, in accordance with a twist angle of the torsion bar 4. In this way, a torque of the electric motor 10 in the rightward rotation direction is restrained, and accordingly, the twisting of the torsion bar 4 is restrained. Therefore, vibration of the steering wheel 1 generated due to the inertia of the steering wheel 1 and the twisting of the torsion bar 4 is restrained. The vibration compensation signal is computed in such a manner that the larger the twist angle computed by the twist angle computation unit 71, the more the signal restrains the rotation (torque) of the electric motor 10 in the direction of the twisting of the torsion bar 4. That is, as the vibration compensation signal is computed as a value corresponding to the magnitude of the twist angle and acts on the electric motor 10 in the direction in which the twisting is cancelled out, the twisting of the torsion bar 4 can be restrained with high precision.

The automatic steering control unit 60 further includes: an adder 64 serving as a corrected angular velocity target value computation unit that computes a corrected angular velocity target value on the basis of the angular velocity target value computed by the angular velocity target value computation unit 61 and the vibration compensation signal computed by the vibration compensation unit 70; an angular velocity computation unit 65 that computes an angular velocity of the steering wheel 1 from the motor rotation angle detected by the motor rotation angle sensor 10a; and an angular velocity control unit 66 that generates an automatic steering target value for controlling the electric motor 10 on the basis of the corrected angular velocity target value computed by the adder 64 and the angular velocity of the steering wheel 1 computed by the angular velocity computation unit 65.

The adder 64 computes the corrected angular velocity target value by adding the vibration compensation signal to the angular velocity target value.

The angular velocity computation unit 65 computes an angular velocity of a rotation shaft of the electric motor 10 from the number of revolutions of the motor per unit time detected by the motor rotation angle sensor 10a. The angular velocity computation unit 65 further computes an angular velocity of the steering wheel 1 by dividing the angular velocity of the rotation shaft of the electric motor 10 by the speed reduction rate of the decelerator 11. The angular velocity of the steering wheel 1 thus computed by the angular velocity computation unit 65 is equivalent to the actual angular velocity of the steering wheel 1. Note that when the detection cycle of the steering angle sensor 15 is short, the angular velocity of the steering wheel 1 may be computed on the basis of the steering angle detected by the steering angle sensor 15.

The angular velocity control unit 66 generates the automatic steering target value for controlling the electric motor 10 on the basis of the difference between the corrected angular velocity target value computed by the adder 64 and the angular velocity of the steering wheel 1 computed by the angular velocity computation unit 65. Specifically, the angular velocity control unit 66 generates the automatic steering target value by performing PID control with respect to this difference. The angular velocity control unit 66 generates, on the basis of the difference between the corrected angular velocity target value computed by the adder 64 and the angular velocity of the steering wheel 1 computed by the angular velocity computation unit 65, the automatic steering target value for controlling the electric motor 10 so that the actual angular velocity of the steering wheel 1 matches the corrected angular velocity target value. That is, the angular velocity control unit 66 performs speed feedback control based on the difference between a target value of the angular velocity of the steering wheel 1 and the actual angular velocity of the steering wheel 1.

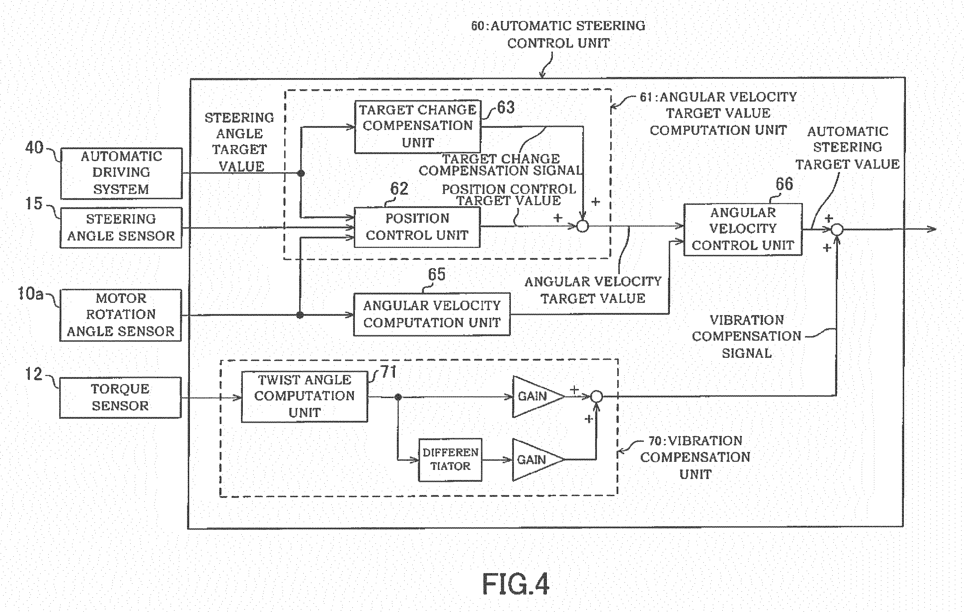

In the automatic steering control unit 60, the corrected angular velocity target value is computed by adding, in the adder 64, the vibration compensation signal computed by the vibration compensation unit 70 to the angular velocity target value computed by the angular velocity target value computation unit 61. The corrected angular velocity target value thus computed is input to the angular velocity control unit 66 as a target value. The angular velocity control unit 66 generates, on the basis of the difference between the corrected angular velocity target value computed by the adder 64 and the actual angular velocity of the steering wheel 1 computed by the angular velocity computation unit 65, the automatic steering target value for controlling the electric motor 10 so that the actual angular velocity of the steering wheel 1 matches the corrected angular velocity target value. The difference between the angular velocity target value computed by the angular velocity target value computation unit 61 and the angular velocity fed back by the angular velocity computation unit 65 is the difference between signals to which the vibration compensation signal has been added. Therefore, this difference has a relatively small value. This stabilizes control in the angular velocity computation unit 65. Note that as shown in FIG. 4, the electric motor 10 may be controlled on the basis of a signal obtained by adding the vibration compensation signal computed by the vibration compensation unit 70 to the automatic steering target value computed by the angular velocity control unit 66.

A description is now given of automatic steering by the automatic steering control unit 60 configured in the foregoing manner.

When the steering angle target value has been input from the automatic driving system 40 to the angular velocity target value computation unit 61, the angular velocity target value computation unit 61 computes the angular velocity target value for controlling the electric motor so that the steering angle detected by the steering angle sensor 15 matches the steering angle target value. In parallel to this, the angular velocity computation unit 65 computes an angular velocity of the steering wheel 1 from the rotation angle of the motor detected by the motor rotation angle sensor 10a.

The angular velocity control unit 66 computes, on the basis of the difference between the angular velocity target value computed by the angular velocity target value computation unit 61 and the angular velocity of the steering wheel 1 computed by the angular velocity computation unit 65, the automatic steering target value for controlling the electric motor 10 so that the actual angular velocity of the steering wheel 1 matches the angular velocity target value. The automatic steering target value is input to the current control unit 31, and the current control unit 31 controls the electric motor 10 via the driving circuit 32. The electric motor 10 rotates the steering shaft 7 via the decelerator 11 so that the angular velocity of the steering wheel 1 becomes equal to the steering angle target value.

Once the electric motor 10 has started to rotate in the foregoing manner, the torsion bar 4 becomes twisted due to the inertia of the steering wheel 1 and the spring property of the torsion bar 4 as described above. When the torsion bar 4 has been twisted, a torque is detected by the torque sensor 12, and this torque is input to the twist angle computation unit 71 of the vibration compensation unit 70. The twist angle computation unit 71 computes a twist angle of the torsion bar 4. The vibration compensation unit 70 computes a vibration compensation signal for controlling the electric motor 10 in the direction in which the twisting of the torsion bar 4 is restrained on the basis of this twist angle. The adder 64 adds the vibration compensation signal computed by the vibration compensation unit 70 to the angular velocity target value computed by the angular velocity target value computation unit 61, and inputs the result of the addition as the corrected angular velocity target value to the angular velocity control unit 66. The angular velocity control unit 66 computes the automatic steering target value for controlling the electric motor 10 on the basis of the difference between the corrected angular velocity target value computed by the adder 64 and the actual angular velocity of the steering wheel 1 computed by the angular velocity computation unit 65. Accordingly, the electric motor 10 is controlled by the automatic steering target value, to which the vibration compensation signal computed by the vibration compensation unit 70 has been added, in the direction in which the twisting of the torsion bar 4 is restrained in accordance with the magnitude of the twist angle of the torsion bar 4, so that the angular velocity of the steering wheel 1 becomes equal to the steering angle target value. In other words, the electric motor 10 is controlled so that the angular velocity of the steering wheel 1 becomes equal to the steering angle target value in a state where a torque in the rotation direction is restrained by an amount corresponding to the magnitude of the twist angle of the torsion bar 4. This can restrain vibration of the steering wheel 1 generated due to the inertia of the steering wheel 1 and the spring property of the torsion bar 4.

The foregoing embodiment achieves the following advantageous effects.

In the electric power steering device 100, the automatic steering control unit 60 controls the electric motor on the basis of the angular velocity target value computed by the angular velocity target value computation unit 61 and the vibration compensation signal for controlling the electric motor 10 in the direction in which the twisting of the torsion bar 4 is restrained on the basis of the twist angle computed by the vibration compensation unit 70. In this way, the electric motor 10 is controlled so that the angular velocity of the steering wheel 1 becomes equal to the steering angle target value in a state where a torque in the rotation direction is restrained on the basis of the twist angle of the torsion bar 4. Therefore, vibration of the steering wheel 1 generated due to the inertia of the steering wheel 1 and the spring property of the torsion bar 4 can be restrained.

In the electric power steering device 100, the automatic steering control unit 60 further includes the angular velocity computation unit 65 that computes an angular velocity of the steering wheel 1. In this way, the electric motor 10 is controlled on the basis of the difference between the angular velocity target value and the angular velocity of the steering wheel 1. That is, as the electric motor 10 is controlled on the basis of the angular velocity in addition to the steering angle, the precision of control is improved.

After the adder 64 has computed the corrected angular velocity target value by adding the angular velocity target value and the vibration compensation signal, the angular velocity control unit 66 generates the automatic steering target value on the basis of the difference between the corrected angular velocity target value and the angular velocity of the steering wheel 1. As the difference between the corrected angular velocity target value, which is obtained by adding the vibration compensation signal to the angular velocity target value, and the actual angular velocity of the steering wheel 1 is the difference between signals to which the vibration compensation signal has been added (signals that take into account the vibration compensation signal), this difference is small compared to a case where the adder 64 is arranged in a position posterior to the angular velocity control unit 66. This reduces the influence of the vibration compensation signal on the difference between the corrected angular velocity target value and the angular velocity of the steering member, thereby improving the stability of control in the angular velocity computation unit 65.

The angular velocity target value computation unit 61 controls the electric motor 10 on the basis of the angular velocity target value obtained by adding the target change compensation signal, which is based on a change per unit time in the steering angle target value, to the position control target value for controlling the electric motor 10 on the basis of the difference between the steering angle target value and the steering angle of the steering wheel 1 so as to make the steering angle match the steering angle target value. Thus, the tracking property with respect to the change in the steering angle target value is improved.

Below is a comprehensive description of the configurations, functions, and advantageous effects of the embodiment of the present invention configured in the foregoing manner.

The electric power steering device 100 includes: the steering shaft 7 that is joined to the steering member (the steering wheel 1) operated by the driver, and rotates as the driver operates the steering member (the steering wheel 1); the torsion bar 4 composing a part of the steering shaft 7; the torque sensor 12 that detects a torque acting on the torsion bar 4; the electric motor 10 used for steering assistance based on a detection signal from the torque sensor 12 or automatic steering based on out-of-vehicle information; and the automatic steering control unit 60 that controls the electric motor 10 during the automatic steering. The automatic steering control unit 60 includes: the angular velocity target value computation unit 61 that computes the angular velocity target value for controlling the electric motor 10 on the basis of the steering angle target value and the steering angle of the steering member (the steering wheel 1), the steering angle target value being set on the basis of the moving target position of the vehicle, the steering angle being detected by the steering angle detection unit (the steering angle sensor 15, the motor rotation angle sensor 10a) that detects the steering angle; and the vibration compensation unit 70 that computes a twist angle of the torsion bar 4 on the basis of the torque detected by the torque sensor 12, and computes the vibration compensation signal for controlling the electric motor 10 in the direction in which the twisting of the torsion bar 4 is restrained on the basis of the twist angle. The automatic steering control unit 60 controls the electric motor 10 on the basis of the angular velocity target value and the vibration compensation signal.

According to this configuration, as the electric motor 10 is controlled on the basis of the angular velocity target value and the vibration compensation signal for controlling the electric motor 10 in the direction in which the twisting of the torsion bar 4 is restrained, automatic steering can be performed while restraining the twisting of the torsion bar 4. Therefore, vibration of the steering wheel 1 generated due to the inertia of the steering wheel 1 and the spring property of the torsion bar 4 can be restrained during automatic steering.

Furthermore, in the electric power steering device 100, the automatic steering control unit 60 further includes the angular velocity computation unit 65 that computes the angular velocity of the steering member (the steering wheel 1), and the electric motor 10 is controlled on the basis of the difference between the angular velocity target value and the angular velocity of the steering member (the steering wheel 1).

According to this configuration, as the electric motor 10 is controlled on the basis of the angular velocity in addition to the steering angle, the precision of control is improved.

Furthermore, in the electric power steering device 100, the automatic steering control unit 60 further includes: the corrected angular velocity target value computation unit that computes the corrected angular velocity target value on the basis of the angular velocity target value and the vibration compensation signal; and the angular velocity computation unit 65 that computes the angular velocity of the steering member. The electric motor 10 is controlled on the basis of the difference between the corrected angular velocity target value and the angular velocity of the steering member.

According to this configuration, the electric motor 10 is controlled on the basis of the difference between the corrected angular velocity target value, which is computed on the basis of the angular velocity target value and the vibration compensation signal, and the angular velocity of the steering member (the steering wheel 1). The difference between the corrected angular velocity target value and the angular velocity of the steering member (the steering wheel 1) is the difference between signals to which the vibration compensation signal has been added. This reduces the influence of the vibration compensation signal on the difference between the corrected angular velocity target value and the angular velocity of the steering member, thereby improving the stability of control.

Furthermore, in the electric power steering device 100, the automatic steering control unit 60 further includes: the angular velocity computation unit 65 that computes the angular velocity of the steering member; and the angular velocity control unit 66 that computes the automatic steering target value on the basis of the angular velocity target value and the angular velocity of the steering member. The automatic steering control unit 60 controls the electric motor 10 on the basis of the automatic steering target value and the vibration compensation signal.

Furthermore, in the electric power steering device 100, the angular velocity target value computation unit 61 includes: the position control unit 62 that computes, on the basis of the difference between the steering angle target value and the steering angle, the position control target value for controlling the electric motor 10 so that the steering angle matches the steering angle target value; and the target change compensation unit 63 that computes the target change compensation signal on the basis of a change per unit time in the steering angle target value. The angular velocity target value is obtained by adding the target change compensation signal to the position control target value.

According to this configuration, the angular velocity target value computation unit 61 controls the electric motor 10 on the basis of the angular velocity target value obtained by adding the position control target value, which is based on the difference between the steering angle target value and the steering angle of the steering member (the steering wheel 1), and the target change compensation signal, which is based on a change per unit time in the steering angle target value. Thus, the tracking property with respect to the change in the steering angle target value is improved.

Furthermore, in the electric power steering device 100, the angular velocity target value computation unit 61 computes the steering angle of the steering member (the steering wheel 1) on the basis of the motor rotation angle of the electric motor 10 detected by the motor rotation angle sensor 10a and the rotation angle of the steering member (the steering wheel 1) detected by the steering angle sensor 15.

According to this configuration, as the detection cycle of the motor rotation angle sensor 10a is shorter than that of the steering angle sensor 15, the high-precision steering angle can be obtained by computing the steering angle of the steering member (the steering wheel 1) on the basis of the motor rotation angle of the electric motor 10 detected by the motor rotation angle sensor 10a and the rotation angle of the steering member (the steering wheel 1) detected by the steering angle sensor 15.

Embodiments of this invention were described above, but the above embodiments are merely examples of applications of this invention, and the technical scope of this invention is not limited to the specific constitutions of the above embodiments.

Although the foregoing embodiment has described, as an example, the electric power steering device of a so-called single-pinion type that applies a driving force of the electric motor 10 to the steering shaft 7, the foregoing embodiment is also applicable to an electric power steering device of a dual-pinion type that includes, separately from the steering shaft 7 that transmits the rotation of the steering wheel 1, a shaft having an assist pinion that transmits the rotation of the electric motor 10 to the rack shaft 5.

The automatic steering control unit 60 may not include the angular velocity control unit 66. Furthermore, the angular velocity target value computation unit 61 may not include the target change compensation unit 63. It is sufficient for the angular velocity target value computation unit 61 to compute the angular velocity target value on the basis of the steering angle target value and the steering angle.

In the foregoing embodiment, the angular velocity computation unit 65 computes the angular velocity of the steering wheel 1 on the basis of a detection signal from the motor rotation angle sensor 10a. Alternatively, the angular velocity of the steering wheel 1 may be computed from a steering angle detected by the steering angle sensor 15 or an angle detected by an angle sensor provided for the torque sensor 12.

This application claims priority based on Japanese Patent Application No.2015-196055 filed with the Japan Patent Office on October 1, 2015, the entire contents of which are incorporated into this specification.

## Claims

1. An electric power steering device comprising:
a steering shaft joined to a steering member operated by a driver, the steering shaft being configured to rotate as the driver operates the steering member;
a torsion bar composing a part of the steering shaft;
a torque sensor configured to detect a torque acting on the torsion bar;
an electric motor used for steering assistance based on a detection signal from the torque sensor or automatic steering based on out-of-vehicle information; and
an automatic steering control unit configured to control the electric motor during the automatic steering,
wherein
the automatic steering control unit includes
an angular velocity target value computation unit configured to compute an angular velocity target value for controlling the electric motor on the basis of a steering angle target value and a steering angle of the steering member, the steering angle target value being set on the basis of a moving target position of a vehicle, the steering angle being detected by a steering angle detection unit configured to detect the steering angle, and
a vibration compensation unit configured to compute a twist angle of the torsion bar on the basis of the torque detected by the torque sensor, and compute a vibration compensation signal for controlling the electric motor in a direction of restraint of twisting of the torsion bar on the basis of the twist angle, and
the automatic steering control unit controls the electric motor on the basis of the angular velocity target value and the vibration compensation signal.

2. The electric power steering device according to claim 1,
wherein
the automatic steering control unit further includes an angular velocity computation unit configured to compute an angular velocity of the steering member, and
the electric motor is controlled on the basis of a difference between the angular velocity target value and the angular velocity of the steering member.

3. The electric power steering device according to claim 1,
wherein
the automatic steering control unit further includes
a corrected angular velocity target value computation unit configured to compute a corrected angular velocity target value on the basis of the angular velocity target value and the vibration compensation signal, and
an angular velocity computation unit configured to compute an angular velocity of the steering member, and
the electric motor is controlled on the basis of a difference between the corrected angular velocity target value and the angular velocity of the steering member.

4. The electric power steering device according to claim 1,
wherein
the automatic steering control unit further includes
an angular velocity computation unit configured to compute an angular velocity of the steering member, and
an angular velocity control unit configured to compute an automatic steering target value on the basis of the angular velocity target value and the angular velocity of the steering member,
wherein
the automatic steering control unit controls the electric motor on the basis of the automatic steering target value and the vibration compensation signal.

5. The electric power steering device according to claim 1,
wherein
the angular velocity target value computation unit includes
a position control unit configured to compute, on the basis of a difference between the steering angle target value and the steering angle, a position control target value for controlling the electric motor so that the steering angle matches the steering angle target value, and
a target change compensation unit configured to compute a target change compensation signal on the basis of a change per unit time in the steering angle target value, and
the angular velocity target value is obtained by adding the target change compensation signal to the position control target value.

6. The electric power steering device according to claim 1,
wherein
the angular velocity target value computation unit computes the steering angle of the steering member on the basis of a motor rotation angle of the electric motor detected by a motor rotation angle sensor and a rotation angle of the steering member detected by a steering angle sensor.
